# EUROPEAN PATENT APPLICATION

(11) **EP 1 972 887 A1**
(43) Date of publication of application: **24.09.2008**
(21) Application number: 08153248.3
(22) Date of filing: 25.03.2008
(51) Int. Cl.: G01B 11/25

(54) **System and method for height measurement**

(30) Priority: 21.03.2007 US 895988 P
(71) Applicant: Camtek LTD., 23150 Migdal-Haemek (IL)
(72) Inventor: Ben Levy, Meir, Haifa 34651 (IL)
(74) Representative: Zimmermann & Partner

(57) **Abstract**

A method for determining a height of an area cell, the method includes:
scanning a line of light over multiple area cells of an object that form an area and
obtaining multiple images; wherein each image comprises detection signals associated with at least one area cell; determining a height of an area cell in response to a comparison between image information of different images that is associated with the area cell.

## Description

The invention relates to systems and methods for determining a height.

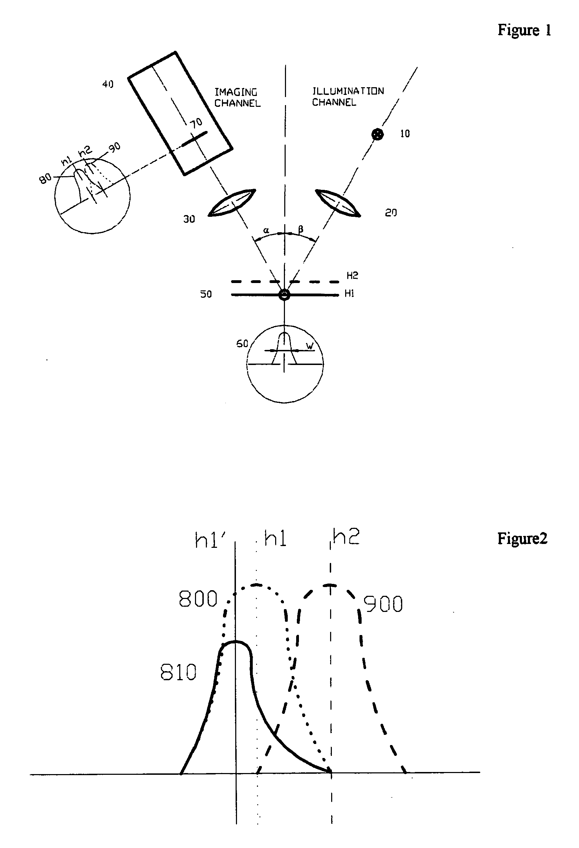

A common way to measure height of small features, such as wafers or PCB bumps is by triangulation scanning. The concept can be well understood from figure 1 showing schematically the optical setup of triangulation system 11.

System 11 includes illumination channel 12 and imaging channel 42. Optical axis 21 of illumination channel 12 deviates by tilt angle β 22 from normal 9 to object 50. Optical axis 31 of imaging channel 42 deviates by tilt angle β 22 from normal 9. Object 50 can include one or more areas of interest.

Illumination channel 12 projects a line of light upon the object 50. having Intensity distribution as shown by graph 60. The line of light may be originated from a laser or from incoherent light source. If laser is used, it is common to concentrate the laser beam to a narrow spot and scan the spot along the line to form a line of light. The line of light is perpendicular to the page of figure 1.

Imaging channel 42 includes optics, such as lens 30, and sensor 70. The line of light is reflected from object 50 and is imaged onto sensor 70. Sensor 70 can be a camera that includes an array of pixels that can be addressed in lines and columns. Sensor 70 can also be an analog Position Sensitive Detector (PSD).

If object 50 has flat (uniform) reflection characteristics, the image of the line of light will appear on sensor 70 with an intensity distribution that resembles graph 80.

A change in the height of object 50 from H1 to H2 causes the image of the line of light to be shifted, as shown by graph 90, to position h2 on the sensor (from the original position h1).

Accordingly, triangulation system 11 is a metrology tool that can sense and measure the height of an object.

A major draw back in using triangulation systems is their sensitivity to the variations in the reflective qualities of the surface of the object along the scan axis.

To better understand this obstacle, consider the three graphs of figure 2. Graphs 800 and 900 are the same as graphs 80 and 90 of figure 1, showing the light distribution of the image at sensor plain when the line of light is reflected from a flat reflecting surface.

Graph 810 of figure 2 shows the light distribution at the sensor plain, when the reflecting object is characterized by variations of reflectivity along the width of the line of light. Considering figure 2, the right side of graph 810 is attenuated, resulting from locally lower reflectivity in this side. The peak of graph 810 is shifted to the left, thus indicating that the object is at height h1' (instead of height h1 - as indicated by graphs 800 and 900).

As an outcome of this, system 11 will identify the imaged line of light at location hl' on the sensors plain, and mistakenly measure the height of the object at height H1' below the true height H1. This error can be as large as the width (W) of the line of light, which is typically a few micrometers for bumps metrology systems.

There is a need to provide efficient height measurement methods and systems.

In light of the above, the methods according to independent claims 1 and 20, the height determination system according to independent claim 11, and the height determination system according to claim 26 are provided.

Further advantages, features, aspects and details are evident from the dependent claims, the description and the drawings.

A height determination system that includes: an illumination channel that is adapted to scan a line of light over multiple area cells of an object that form an area; an imaging channel adapted to obtain multiple images; wherein each image comprises detection signals associated with at least one area cell; and a processor, adapted to determine a height of an area cell in response to a comparison between image information of different images that is associated with the area cell.

A method for determining a height of an area cell, the method includes: scanning a line of light over multiple area cells of an object that form an area and obtaining multiple images; wherein each image comprises detection signals associated with at least one area cell; determining a height of an area cell in response to a comparison between image information of different images that is associated with the area cell.

A method for determining a height of an area cell, the method includes: receiving multiple images; wherein the multiple images are obtained as a result of scanning a line of light over multiple area cells of an object that form an area; wherein each image comprises detection signals associated with at least one area cell; and determining a height of an area cell in response to a comparison between image information of different images that is associated with the area cell.

A height determination system, the system includes: a memory unit, adapted to receive multiple images; wherein the multiple images are obtained as a result of scanning a line of light over multiple area cells of an object that form an area; wherein each image comprises detection signals associated with at least one area cell; and a processor, adapted to determine a height of an area cell in response to a comparison between image information of different images that is associated with the area cell.

Embodiments are also directed to apparatuses for carrying out the disclosed methods and including apparatus parts for performing described method steps. Furthermore, embodiments are also directed to methods by which the described apparatus operates or by which the described apparatus is manufactured. It may include method steps for carrying out functions of the apparatus or manufacturing parts of the apparatus. The method steps may be performed by way of hardware components, firmware, software, a computer programmed by appropriate software, by any combination thereof or in any other manner.

The foregoing and other objects, features, and advantages of the present invention will become more apparent from the following detailed description when taken in conjunction with the accompanying drawings. In the drawings, similar reference characters denote similar elements throughout the different views, in which:

Figure 1 illustrates a prior art system;

Figure 2 illustrate light intensity profiles;

Figure 3 illustrates the reflectivity at a certain region of interest of the object to he scanned;

Figure 4 displays graphs of grey levels as detected by multiple pixels in four different image grabs while scanning the object;

Figure 5 displays in two graphs the grey levels data related to area cells C and D;

Figure 6 illustrates a system according to an embodiment of the invention;

Figure 7A illustrates grey levels of multiple pixels along one column of the sensor: and one threshold, according to an embodiment of the invention;

Figure 7B illustrates gray levels of multiple pixels along one column of the sensor and two thresholds, according to an embodiment of the invention;

Figure 8 is a flow chart of a method for height determination according to an embodiment of the invention;

Figure 9 illustrates a system according to another embodiment of the invention;

Figure 10 is a flow chart of a method for height determination according to an embodiment of the invention;

Figure 11 illustrates multiple areas of interest according to an embodiment of the invention; and

Figure 12 illustrates four images of area cells of an area that are obtained by sensor according to an embodiment of the invention.

The term line of light can be interpreted in its conventional manner or as an elongated illumination pattern. It can be have a rectangular shape, a n elliptical shape, and the like.

The height of an area of an object can be determined. The area can include multiple area cells, and the height of each area cell can be determined by comparing image information of different images.

A method and a system are provided for reducing height metrology errors resulting from surface reflectivity non-uniformity. The method and the system can also improve inter-feature transition effects. Conveniently, the reduction involves synchronizing the scanning speed with the image acquisition process. The method and system can improve the spatial resolution of triangulation scanners.

Conveniently, a sequence of images are obtained. Each image can include light reflected from at least two area cells. The images are obtained so that a certain area cell is imaged (at one image) to a certain pixel of a sensor and is imaged (at the next image) to an adjacent pixel (conveniently along a scan axis). The mentioned above result can be achieved when the image acquisition process and the scanning process are synchronized. It is noted that the synchronization is not necessarily limited to the mentioned above relationship.

According to another embodiment of the invention the synchronization is achieved when the system and method are aware of which image information (of different images) are associated with the same area cell.

Synchronization can be achieved when the scanning speed is matched with the frame rate and pixel size at the object plain. More specifically, when these parameters maintain the equation: V= ΔF/(M*cos(α)).

V is the scanning speed [micron/second]. Δ is the pixel size of the sensor [micron]. F is the frame rate [Hz]. M is the optical magnification (sensor plain/object plain) of the imaging channel. α is the tilt angle of the imaging channel.

It is noted that a synchronization can also be obtained when V= k*ΔF/(M*cos(α)); wherein k is a positive number, conveniently a positive integer.

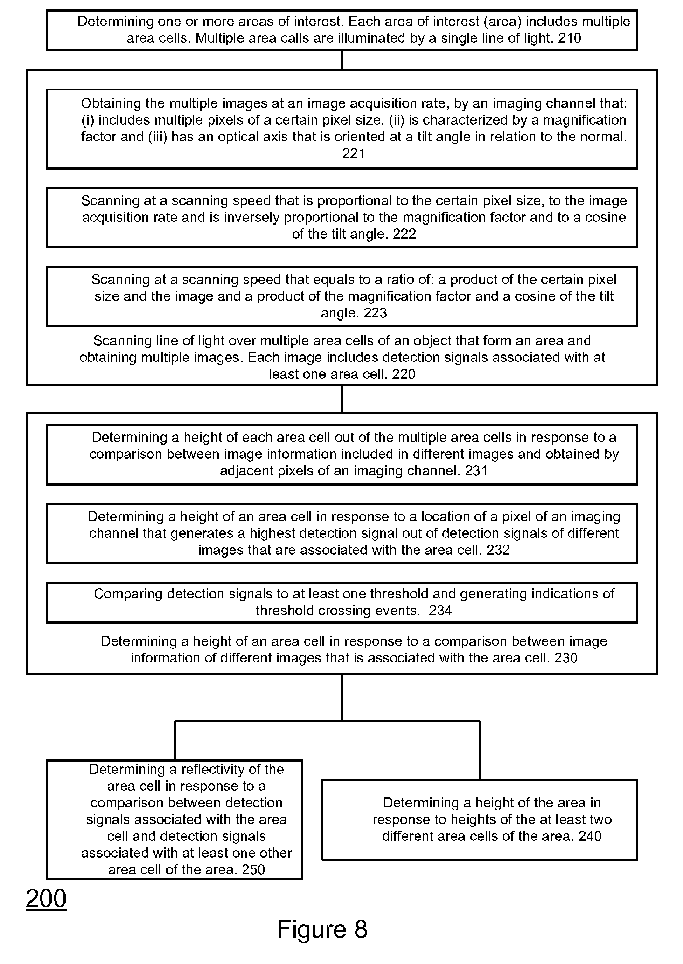

Figure 8 illustrates method 200 for determining a height of an area cell, according to an embodiment of the invention.

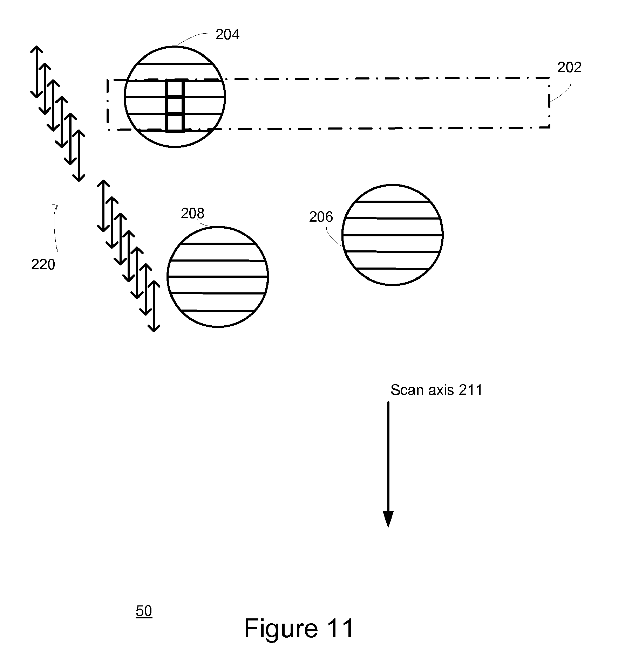

Method 200 starts by stage 210 of determining one or more areas of interest. Each area of interest (area) includes multiple area cells. Multiple area cells are illuminated by a line of light. Referring to the example set fourth in figure 11, object 50 includes three areas of interest 204, 206 and 208. Each area of interest has a round shape and includes six area cells. Line of light 202 is three area cell wide and can scan object 50 in a continuous or non-continuous manner. Typically, the scanning involves mechanical translation (although this is not necessarily so and optical translation can be applied). This mechanical translation is usually maintained as smooth as possible, only the image acquisition operation is executed in spaced apart intervals, as illustrated by arrows 221 that indicate the location (along the scan axis 211) of line of light 202 during different image acquisition operations.

It is noted that line of light 202 scans area 204 (and other area that are not interesting), end to scan area 204, starts to scan area 206 and before ending the scan starts to scan area 208. The scanning of area 208 ends after area 206 is scanned. It is noted that multiple images will include image information about both area 206 and 208 and there will be no need to repeat the scanning operation for each area of interest.

According to yet another embodiment of the invention all the surface of the object are of interest. Thus there are no areas that are not interesting.

Stage 210 is followed by stage 220 of scanning line of light over multiple area cells of an object that form an area and obtaining multiple images. Each image includes detection signals associated with at least one area cell.

For simplicity of explanation it is assumed that area 204 includes six area cells A 111, B 112, C 113, D 114, E 115 and F 116. All these area cells have the same height. The area cells have the dimensions of the sensors pixels, when imaged onto the sensor plain. Thus, the diameter of area 204 spans along six pixels of sensor 70.

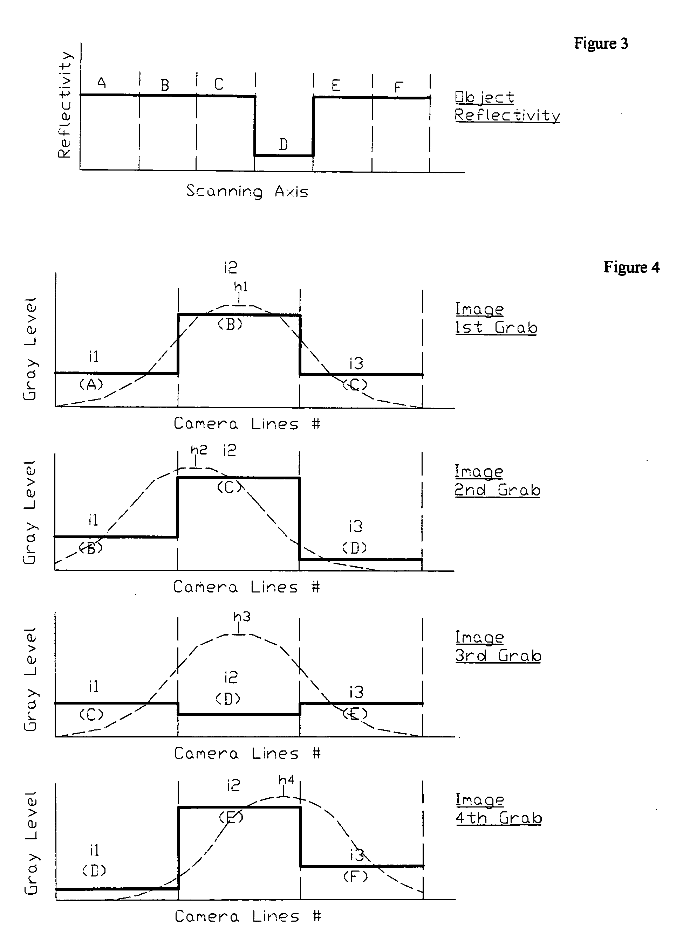

Figure 4 shows the reflectivity of these area cells. All cells (A 111, B 112, C 113, E 115 and F 116) except one (D 115) have the same reflectivity, as illustrated by graph 100. The reflectivity of area cell D 114 is substantially lower than the reflectivity of area cells A 111, B 112, C 113, E 115 and F 116, as further illustrated by graph 100.

It is also assumed that line of light 202 illuminates only three area cells (of three columns of sensor 70) at a time. Accordingly, the width (W) of line of light 202 equals the length (size) of three area cells).

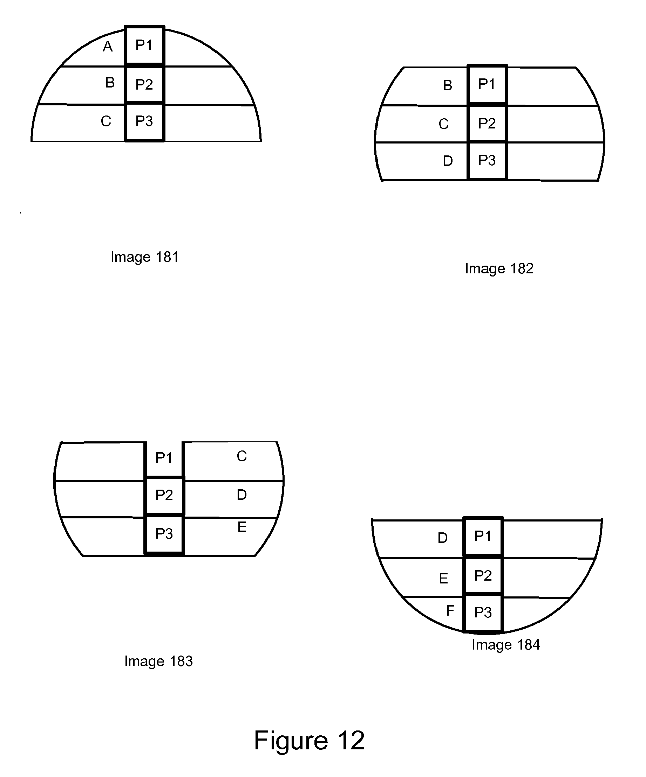

Figure 12 illustrates four images 181, 182, 183 and 184 of area cells of area 204 that are obtained by sensor 70. Image 181 includes image information about area cells A, B and C. The image information is acquired by multiple pixels of sensor 70, such as pixels p1, p2 and p3. Image 182 includes image information about area cells B, C and D. Image 183 includes image information about area cells C, D and E. Image 184 includes image information about area cells D, E and F.

Figure 12 illustrates image information obtained by pixels p1, p2 and p3. The image information includes grey level signals, although other image information formats can be used.

Figure 4 illustrates four light distributions 121, 122, 123 and 124 and the image information obtained by three pixels p1, p2 and p3 during four consecutive image acquisition sequences (four grab operations) that correspond to images 181, 182, 183 and 184.

During the first image grab, area cell A 111 is imaged onto pixel p1, area cell B 112 is imaged onto pixel p2 and area cell C 113 is imaged onto pixel p3. Since all area cells A, B and C have the same reflection quality, the light distribution sensed by these pixels resembles the light distribution of the line of light that is generated by the illumination channel. The grey level of the detection signals generated by pixels p1, p2 and p3 reflect this light distribution - the grey level (I1 131) of the detection signal generated by pixel p1 equals the grey level (L1 131) of the detection signal generated by pixel p3 and is much lower than the grey level (L2 132) of the detection signal generated by pixel p2. The peak of light distribution 121 is located at a location that is indicative of height h1.

During the second image grab, area cell B 112 is imaged onto pixel p1, area cell C 113 is imaged onto pixel p2 and area cell D 114 is imaged onto pixel p3. Due to the lower reflectivity of cell area D 114, the light distribution 122 is distorted. The peak of the light distribution 122 is shifted to the left (in relation to the previously acquired light distribution 121) - towards pixel p1 - indicative of a height h2. The grey level of the detection signals generated by pixels p1, p2 and p3 reflect this distorted light distribution - the grey level (L3 133) of the detection signal generated by pixel p3 is lower than the grey level (L4 134) of the detection signal generated by pixel p1 and is much lower than the grey level (L5 135) of the detection signal generated by pixel p2. It is noted that 14 134 can be higher than 11 131 that in turn can be higher than 13 133.

During the third image grab, area cell C 113 is imaged onto pixel p1, area cell D 114 is imaged onto pixel p2 and area cell E 115 is imaged onto pixel p3. Because area cell D 114 is imaged onto the central pixel (p2) the light distribution 123 is symmetrical although attenuated. The grey level of the detection signals generated by pixels p1, p2 and p3 reflect this attenuated light distribution - the grey level (L7 137) of the detection signal generated by pixel p1 equals the grey level (L6 136) of the detection signal generated by pixel p3 and is higher than the grey level (L7 137) of the detection signal generated by pixel p2. A peak of light distribution 123 is located at a location that is indicative of height h3. Height h3 can be equal to height h1. It is noted that, depending upon the intensity distribution of the line of light, and the reflectivity of area cell D 114, the gray level of pixel p2 can be higher than those of pixels p1 and p3.

During the fourth image grab, area cell D 114 is imaged onto pixel p1, area cell E 115 is imaged onto pixel p2 and area cell F 116 is imaged onto pixel p3. Due to the lower reflectivity of cell area D 114, the light distribution 123 is distorted. The peak of the light distribution 124 is shifted to the right (in relation to the previously acquired light distribution 123) - towards pixel p3 - indicative of a height h4. The grey level of the detection signals generated by pixels p1, p2 and p3 reflect this distorted light distribution - the grey level (L3 133) of the detection signal generated by pixel p1 is lower than the grey level (L4 134) of the detection signal generated by pixel p3 and is much lower than the grey level (L5 135) of the detection signal generated by pixel p2.

A prior art triangulation system that would have extracted the height of area 8 out of one of these graphs would provide three (if h1=h3) or four contradicting height measurements.

For simplicity of explanation the effects of smearing (resulting from continuous scanning) are ignored of. There are various prior art methods for managing smearing and each of those can be implemented.

Conveniently, stage 220 can include scanning the line of light by an illumination channel that has an optical axis that is oriented in relation to a normal to the area and obtaining the multiple images by an imaging channel that has an optical axis that is oriented in relation to the normal. These orientations are illustrated by tilt angles α 32 and β 22 of figure 1.

Stage 220 can include stage 221 of obtaining the multiple images at an image acquisition rate, by an imaging channel that: (i) includes multiple pixels of a certain pixel size, (ii) is characterized by a magnification factor and (iii) has an optical axis that is oriented at a tilt angle in relation to the normal.

Stage 220 can include stage 222 of scanning at a scanning speed that is proportional to the certain pixel size, to the image acquisition rate and is inversely proportional to the magnification factor and to a cosine of the tilt angle.

Stage 220 can include stage 223 of scanning at a scanning speed that equals to a ratio of: a product of the certain pixel size and the image and a product of the magnification factor and a cosine of the tilt angle. In mathematical terms: V= ΔF/(M*cos(α)). V is the scanning speed [micron/second]; Δ is the pixel size of the sensor [micron]; F is the frame rate [Hz]; M is the optical magnification (sensor plain/object plain) of the imaging channel and α is the tilt angle of the imaging channel.

Stage 220 is followed by stage 230 of determining a height of an area cell in response to a comparison between image information of different images that is associated with the area cell.

Stage 230 can be repeated in order to determine the height of at least two area cells.

Stage 230 can include stage 231 of determining a height of each area cell out of the multiple area cells in response to a comparison between image information included in different images and obtained by adjacent pixels of an imaging channel.

Stage 230 can include stage 232 of determining a height of an area cell in response to a location of a pixel of an imaging channel that generates a highest detection signal out of detection signals of different images that are associated with the area cell.

Stage 230 can include stage 234 of comparing detection signals to at least one threshold and generating indications of threshold crossing events. Stage 234 can be followed by storing or transmitting threshold crossing event information.

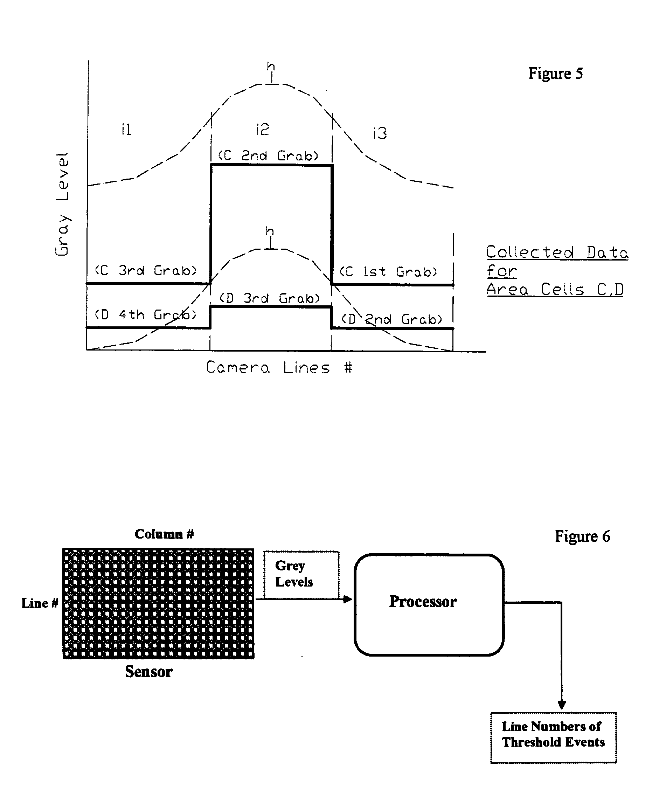

Figure 5 illustrates a height determination that is based upon a comparison of detection signals that were generated as a result of a reflection of light from the same area cell, whereas the detection signals are included in different images.

The height determination is based upon a comparison between image information (although included in different images) relating to the same area cell.

Graph 126 illustrates the image information (grey level) obtained by various pixels (p3 in the first image, pixel p2 in the second image and pixel p1 in the third image) that are associated with (resulting from an illumination of) cell area C 113. Graph 126 represents light distribution 124 that has a peak at a location that represents height h.

Graph 127 illustrates the image information (gray level) obtained by various pixels (p3 in the second image, pixel p2 in the third image and pixel p1 in the fourth image) that are associated with (resulting from an illumination of) cell area D 114. Graph 127 represents light distribution 125 that has a peak at a location that represents height h.

As illustrated by figures 4 and 5 the suggested methods and system provide a height estimation that is less sensitive (and even not sensitive) to differences in the reflectivity of area cells. The method and the system can also improve inter-feature transition effects.

Stage 230 can be followed by stage 240 of determining a height of the area in response to heights of the at least two different area cells of the area.

Stage 230 can also be followed by stage 250 of determining a reflectivity of the area cell in response to a comparison between detection signals associated with the area cell and detection signals associated with at least one other area cell of the area. For example, a comparison between graphs 126 and 127 can provide an indication about the reflectivity of area cell D 114 in relation to area cell C 113.

Conveniently, the suggested method and systems can also improve the spatial resolution.

The analysis of height for collected data of the same area cell yield spatial resolution of one pixel (one area cell). In prior art, the analysis averaged image information from several pixels of different area cells, therefore the spatial resolution was limited to the number of area cells Involved in the analysis, which is roughly the width of the line of light.

Image information can be very large. This can complicate (or increase the cost) of storing image information or transmitting image information. Image information can include grey level signals but this is not necessarily so. For example, the size of image information can be significantly reduced by thresholding the grey level information and generating image information that represent threshold events such as threshold crossing threshold proximity. A threshold event can be represented by indicating which pixels generated a detection signal that equals a threshold, crosses a threshold or is proximate enough to the threshold. The pixels itself (line, column) or the line number can represent a threshold event.

The thresholding can be executed by a processor, such as processor 75 of figure 6. Line numbers of threshold events can be outputted by processor 75, after processor 75 processes grey level detection signals from sensor 70.

Thresholds can be predetermined, or dynamically determined relative to the light intensity of the image (adaptive threshold). Other methods for threshold determination may be applied. Image information (such as grey level, and additionally or alternatively, threshold event information) can be stored at memory unit 77.

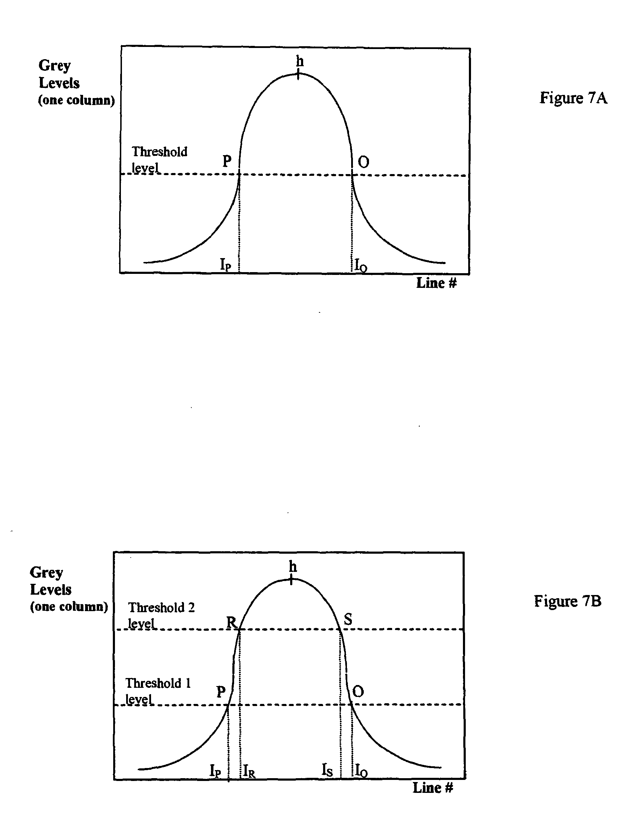

Figure 7A illustrates light distribution 150, first threshold 138 and two threshold events that are detected by pixels P 151 and Q 152. Light distribution 150 is captured by a column of pixels (that includes pixels p1, p2 and p3 as well as other pixels). The high grey levels values of light distribution 150 are provided by pixels that receive light that is reflected from area cells that are illuminated by the line of light. The grey level of detection signals decreases as the distance from the illuminated pixel increases. First threshold crossing events occur at pixels P 151 and Q 152, and at pixels lines I_{P} 161 and I_{Q} 162.

Due to the symmetry of light distribution 150 the height (h) can be evaluated by a location (Lh) that is located at the center of a sensor portion that starts at pixel line lp 161 and ends at pixel line I_{Q} 162. In mathematical terms Lh= (I_{P} + I_{Q})/2.

It is noted that multiple thresholds can be defined. Figure 7B illustrates a second threshold 139 that is higher than threshold 138. First threshold crossing events occur at pixels P 151 and Q 152, and at pixels lines I_{P} 161 and I_{Q} 162. Second threshold crossing events occur at pixels R 153 and S 154, and at pixels lines I_{R} 163 and I_{S} 164.

Due to the symmetry of light distribution 150 the height (h) can be evaluated by a location (Lh) that is the average of I_{P} 161, I_{Q} 162, I_{R} 163 and I_{S} 164: Lh= (I_{P} + I_{Q} + I_{R} + I_{S})/4.

By transmitting or storing only threshold crossing event information a data reduction is achieved.

It should be noticed that the invention is not limited to grey levels or to line numbers of threshold crossing events. A processor that is connected to the sensor can output many types of data after processing the grey levels, which can he collected from different image grabs and be related to certain area cell.

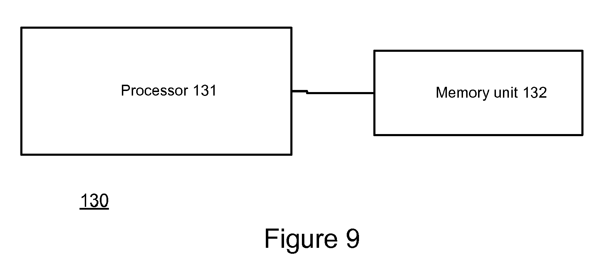

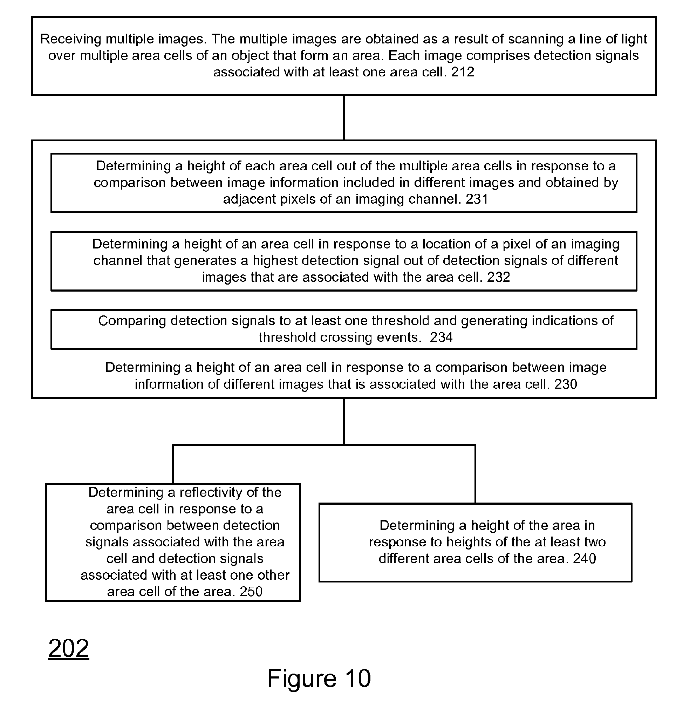

It is noted that although the same system can optically acquire the images and determine the height of an area. This is not necessarily so. For example, a system can receive images that are obtained from a triangulation system and then evaluate (based on image information) the height of an area. This scenario is illustrated by figures 9 and 10. While figure 9 illustrates a height determination method, figure 10 illustrates a height determination system.

Figure 9 illustrates system 130 according to an embodiment of the invention.

System 130 includes memory unit 131 and processor 132. System 130 can be connected to system 12 of figure 1 so as to receive image information from system 12.

Memory unit 131 is adapted to receive multiple images. The multiple images are obtained as a result of scanning a line of light over multiple area cells of an object that form an area. Each image comprises detection signals associated with at least one area cell.

Processor 132 is adapted to determine a height of an area cell in response to a comparison between image information of different images that is associated with the area cell.

Figure 10 illustrates method 202 for determining a height of an area cell, according to an embodiment of the invention.

Method 202 starts by stage 212 of receiving multiple images. The multiple images are obtained as a result of scanning a line of light over multiple area cells of an object that form an area. Each image comprises detection signals associated with at least one area cell. Stage 212 can include receiving images obtained by executing stages 210 and 220 of method 200.

Stage 212 is followed by stage 230 determining a height of an area cell in response to a comparison between image information of different images that is associated with the area cell.

It is noted that method 202 can include stage 240 and 250.

However, other modifications, variations and alternatives are also possible. The specifications and drawings are, accordingly, to be regarded in an illustrative rather than in a restrictive sense.

## Claims

1. A method for determining a height of an area cell, the method comprises:
scanning a line of light over multiple area cells of an object that form an area and obtaining multiple images; wherein each image comprises detection signals associated with at least one area cell; and
determining a height of an area cell in response to a comparison between image information of different images that is associated with the area cell.

2. The method according to claim 1 comprises determining the height of at least two area cells and determining a height of the area in response to heights of the at least two different area cells of the area.

3. The method according to claim 1 or 2 comprises:
scanning the line of light by an illumination channel that has an optical axis that is oriented in relation to a normal to the area; and
obtaining the multiple images by an imaging channel that has an optical axis that is oriented in relation to the normal.

4. The method according to claim 3 comprising obtaining the multiple images at an image acquisition rate, by an imaging channel that comprises multiple pixels of a certain pixel size, that is **characterized by** a magnification factor and has an optical axis that is oriented at a tilt angle in relation to the normal.

5. The method according to claim 4 comprising scanning at a scanning speed that is proportional to the certain pixel size, to the image acquisition rate and is inversely proportional to the magnification factor and to a cosine of the tilt angle.

6. The method according to claim 4 or 5 comprising scanning at a scanning speed that equal to a ratio of: a product of the certain pixel size and the image and a product of the magnification factor and a cosine of the tilt angle.

7. The method according to claim 6 comprising determining a height of each area cell out of the multiple area cells in response to a comparison between image information included in different images and obtained by adjacent pixels of an imaging channel.

8. The method according to one of the claims 1 to 7 comprising determining a height of an area cell in response to a location of a pixel of an imaging channel that generates a highest detection signal out of detection signals of different images that are associated with the area cell.

9. The method according to one of the claims 1 to 8 comprising determining a reflectivity of the area cell in response to a comparison between detection signals associated with the area cell and detection signals associated with at least one other area cell of the area.

10. The method according to one of the claims 1 to 9 comprising comparing detection signals to at least one threshold and generating indications of threshold crossing events.

11. A height determination system that comprises:
an illumination channel that is adapted to scan a line of light over multiple area cells (111, 112, 113, 114, 115, 116) of an object that form an area (204, 206, 208);
an imaging channel adapted to obtain multiple images (181, 182, 183, 184); wherein each image comprises detection signals associated with at least one area cell; and
a processor (75, 131), adapted to determine a height of an area cell in response to a comparison between image information of different images that is associated with the area cell.

12. The system according to claim 11 wherein the processor (75, 131) is adapted to determine the height of at least two area cells and determine a height of the area in response to heights of the at least two different area cells of the area.

13. The system according to claim 11 or 12 wherein the illumination channel has an optical axis that is oriented in relation to a normal to the area and the imaging channel has an optical axis that is oriented in relation to the normal.

14. The system according to one of the claims 11 to 13 wherein the illumination channel obtains the multiple images at an image acquisition rate, comprises multiple pixels of a certain pixel size, is **characterized by** a magnification factor and has an optical axis that is oriented at a tilt angle in relation to the normal.

15. The system according to claim 14 wherein the illumination channel scans the area at a scanning speed that is proportional to the certain pixel size, to the image acquisition rate and is inversely proportional to the magnification factor and to a cosine of the tilt angle.

16. The system according to claim 14 or 15 wherein the illumination channel scans the area at a scanning speed that equal to a ratio of a product of the certain pixel size and the image acquisition rate, and a product of the magnification factor and a cosine of the tilt angle.

17. The system according to claim 16 wherein the processor is adapted to determine a height of each area cell out of the multiple area cells (111, 112, 113, 114, 115, 116) in response to a comparison between image information included in different images and obtained by adjacent pixels of an imaging channel.

18. The system according to one of the claims 11 to 17 wherein the processor (75, 131) is adapted to determine a height of an area cell in response to a location of a pixel of an imaging channel that generates a highest detection signal out of detection signals of different images that are associated with the area cell.

19. The system according to one of the claims 11 to 18 wherein the processor (75, 131) is adapted to determine a reflectivity of the area cell in response to a comparison between detection signals associated with the area cell and detection signals associated with at least one other area cell of the area.

20. The system according to one of the claims 11 to 19 wherein the processor (75, 131) is adapted to determine to compare detection signals to at least one threshold and generate indications of threshold crossing events.

21. A method for determining a height of an area cell, the method comprises:
receiving multiple images; wherein the multiple images are obtained as a result of scanning a line of light over multiple area cells of an object that form an area; wherein each image comprises detection signals associated with at least one area cell; and determining a height of an area cell in response to a comparison between image information of different images that is associated with the area cell.

22. The method according to claim 21 comprising determining a height of each area cell out of the multiple area cells in response to a comparison between image information included in different images and obtained by adjacent pixels of an imaging channel. The method according to claim 1 comprising determining a height of an area cell in response to a location of a pixel of an imaging channel that generates a highest detection signal out of detection signals of different images that are associated with the area cell.

23. The method according to claim 21 or 22 comprising determining the height of at least two area cells and determining a height of the area in response to heights of the at least two different area cells of the area.

24. The method according to one of the claims 21 to 23 comprising determining a reflectivity of the area cell in response to a comparison between detection signals associated with the area cell and detection signals associated with at least one other area cell of the area.

25. The method according to one of the claims 21 to 24 comprising comparing detection signals to at least one threshold and generating indications of threshold crossing events.

26. A height determination system, the system comprises:
a memory unit (77, 132), adapted to receive multiple images; wherein the multiple images are obtained as a result of scanning a line of light over multiple area cells of an object that form an area; wherein each image comprises detection signals associated with at least one area cell; and
a processor (75, 131), adapted to determine a height of an area cell in response to a comparison between image information of different images that is associated with the area cell.

27. The system according to claim 26 wherein the processor (75, 131) is adapted to determine a height of each area cell out of the multiple area cells in response to a comparison between image information included in different images and obtained by adjacent pixels of an imaging channel.

28. The system according to claim 26 or 27 wherein the processor (75, 131) is adapted to determine a height of an area cell in response to a location of a pixel of an imaging channel that generates a highest detection signal out of detection signals of different images that are associated with the area cell.

29. The system according to one of the claims 26 to 28 wherein the processor (75, 131) is adapted to determine a reflectivity of the area cell in response to a comparison between detection signals associated with the area cell and detection signals associated with at least one other area cell of the area.
